# EUROPÄISCHE PATENTSCHRIFT

(11) **EP 3 409 632 B1**
(45) Veröffentlichungstag und Bekanntmachung des Hinweises auf die Patenterteilung: **26.02.2025**
(21) Anmeldenummer: 18174991.2
(22) Anmeldetag: 30.05.2018
(51) Int. Cl.: E04D 13/035, B66B 11/00, F24F 7/02, F24F 11/34, F24F 110/70, E04D 13/03

(54) **VORRICHTUNG ZUM KONTROLLIERTEN ÖFFNEN UND/ODER SCHLIESSEN EINER ÖFFNUNG**
DEVICE FOR CONTROLLED OPENING AND/OR CLOSING OF AN OPENING
DISPOSITIF DE COMMANDE D'OUVERTURE ET/OU DE FERMETURE CONTRÔLÉES D'UNE OUVERTURE

(30) Priorität: 31.05.2017 DE 102017111921; 31.05.2017 DE 202017103267 U
(43) Veröffentlichungstag der Anmeldung: 05.12.2018
(73) Patentinhaber: Schako KG, 78600 Kolbingen (DE)
(72) Erfinder: VÖGELI, Beat, 8248 Uhwiesen (CH)
(74) Vertreter: Patentanwälte und Rechtsanwalt Weiß, Arat & Partner mbB

(56) Entgegenhaltungen:
- EP-A2- 0 479 238
- WO-A1-2016/062794
- WO-A1-2017/055889
- WO-A1-83/02640

## Beschreibung

Die vorliegende Erfindung betrifft eine Vorrichtung nach dem Oberbegriff des Anspruchs 1.

### Stand der Technik

Es ist bekannt, dass Gebäudebereiche, insbesondere diejenigen, die sich in oder an der Gebäudehülle befinden, wie beispielsweise Aufzugsschächte und Luftführungsrohre, im Falle eines Gasalarms, insbesondere aber in einem Brandfall, frei von dem Gas zu halten sind.

In diesem Zusammenhang wird auf die WO 2016/062794 A1 verwiesen, welche eine Verschlussanordnung für eine Lüftungsöffnung in einem Baukörper, insbesondere in einer Wand oder in einer Decke eines Aufzugschachtes, wobei die Lüftungsöffnung im Baukörper einen Öffnungsquerschnitt aufweist, der auf einer Außenseite des Baukörpers mit einer Abdeckvorrichtung abgedeckt ist, die wenigstens dazu ausgebildet ist, das Eindringen von Feuchtigkeit und/oder Fremdkörpern in die Lüftungsöffnung zu verhindern, wobei auf einer Innenseite des Baukörpers eine Verschlussvorrichtung vorgesehen ist, wobei die Verschlussvorrichtung einen Rahmen aufweist, in dem eine Verschlussplatte geführt ist, und wobei die Verschlussplatte eine Erstreckungsebene aufweist, in der die Verschlussplatte zwischen einer Schließstellung und einer Öffnungsstellung über der Lüftungsöffnung bewegbar ist.

Nach dem aktuellen Stand der Technik wird davon ausgegangen, dass sowohl die Entrauchung als auch die Lüftung des Aufzugschachtes auf natürliche Art und Weise erfolgen kann. Daher verfügen Aufzugsschächte generell über eine Öffnung, über welche sowohl eine Lüftung des Schachtes und somit der Aufzugskabine, als auch im Brandfall eine Entrauchung des Schachtes durch natürliche Ventilation, d.h. rein passiv und ohne aktive Lüftung, gewährleistet sein soll. Diese Öffnung befindet sich generell im Aufzugsschachtkopf oder, falls vorhanden, in einem darüber gelegenen Aufzugsmaschinenraum und führt direkt nach ausserhalb der Gebäudehülle.

Da Aufzugsschächte des Öfteren über den Tag hinaus belüftet werden müssen, wäre eine Auskühlung der Immobilie oder auch ein unerwünschter Wärmeeintrag in dieselbe über den Aufzugsschacht bei einer solchen Praktik unvermeidlich und hätte schlimmstenfalls ein Kollabieren des Energiekonzeptes der Immobilie zur Folge.

Lediglich im Brandfall sind auch bei solchen Energiekonzepten alle Mittel, also ebenfalls die Zufuhr von externer Frischluft in die Immobilie, unabhängig von der Temperatur dieser Frischluft, recht, um eine möglichst effiziente Entrauchung des Aufzugsschachtes zu gewährleisten.

Die DE 202 016 101 528 U1 beschreibt ein System zum Belüften und/oder Entrauchen eines, insbesondere mit in unterschiedlichen Aufzugsebenen liegenden, getrennten Brandabschnitten eines Gebäudes in Verbindung stehenden Aufzugsschachts, der durch vertikale Schachtwände begrenzt ist.

Folgende Komponenten sind dafür bei der oben genannten Erfindung von Nöten:
- Lüfter, die auf einander gegenüberliegenden Seiten des Aufzugsschachts angeordnet sind, wobei auf jeder der Seiten wenigstens zwei an unterschiedlichen vertikalen Positionen angeordnete Lüfter vorgesehen und wenigstens die auf einer der Seiten angeordneten Lüfter mit umkehrbarer Luftförderrichtung betreibbar sind;
- ein Zuluftkanal, der den Aufzugsschacht mit einem ausserhalb des Gebäudes liegenden Aussenbereich verbindendet und ein erstes motorisch verstellbares Verschlusselement aufweist, mit dem er verschließbar ist;
- ein Abluft- und Entrauchungskanal, der den Aufzugsschacht mit dem Aussenbereich verbindet und ein zweites motorisch verstellbares Verschlusselement aufweist, mit dem er verschließbar ist;
- eine Steuerung, die mit den Lüftern und mit Antriebsmotoren für das motorische Verstellen jeweils des ersten und des zweiten Verschlusselements verbunden ist, wobei die Steuerung zum Steuern des Antriebs der Lüfter und für die mit umkehrbarer Luftförderrichtung betreibbaren Lüftern auch zum Steuern von deren Luftförderrichtung und zudem zum Steuern der Antriebsmotoren der Verschlusselemente eingerichtet ist, und
- wenigstens ein mit der Steuerung verbundener Sensor, wobei die Verbindung zwischen dem wenigstens einen Sensor und der Steuerung dazu eingerichtet ist, der Steuerung Sensorsignale über die Notwendigkeit einer Lüftung der Aufzugskabine und/oder des Aufzugsschachtes und/oder die Notwendigkeit einer Entrauchung des Aufzugsschachts und/oder eines Luftwechsels der Luft im Aufzugsschacht zur Verfügung zu stellen.

Die oben genannte Erfindung zeigt ein System auf, welches sehr kompliziert und aufwändig in der Umsetzung ist. Zudem ist es kostspielig und für Bestandsgebäude eher nicht einsetzbar.

Aus der EP 0 479 238 ist eine Aufzugstür mit einem Schichtaufbau nach dem Oberbegriff des Anspruchs 1 bekannt.

Ferner ist in diesem Zusammenhang noch die WO 83/02640 A1 anzuführen, welche ein Rauchabdichtungssystem zur Verwendung mit Schiebetüren, insbesondere Aufzugstüren Türen und Brandschutztüren offenbart.

### Aufgabe der Erfindung

Die Aufgabe der vorliegenden Erfindung ist es, eine einfache und kostengünstige Alternative zum kontrollierten Öffnen und/oder Schliessen einer Öffnung in einem Gebäude aufzuzeigen, welche zudem auch in Bestandsgebäuden einsetzbar ist.

### Lösung der Aufgabe

Zur Lösung der Aufgabe führen die Merkmale nach Anspruch 1.

Der Vorteil daran ist, dass der Schieber aufgrund dieser Eigenschaft eine geringe Aufbauhöhe aufweist, dementsprechend wenig Raum in Anspruch nimmt und somit auch in Bestandsgebäuden einsetzbar ist.

Die Bewegung des Schiebers erfolgt etwa rechtwinklig zu einer Mittelachse der Öffnung und kann damit platzsparend in einen Aufzugsschacht eingesetzt werden. Vom Erfindungsgedanken umfasst wird auch, dass der Schieber schräg zu der Mittelachse bewegbar ist. Dann allerdings muss er grösser als der Öffnungsquerschnitt ausgelegt sein.

Der Schieber weist bevorzugt einen Aussenumfang auf, der in etwa dem Querschnitt der Öffnung entspricht. Beim Öffnen des Schiebers wird somit ein sehr großer Teil der Öffnung freigelegt, was dazu führt, dass der Aufzugsschacht schnell belüftet werden kann.

Der Schieber wird an und/oder in Schienen geführt und gewährleistet somit ein reibungsloses Öffnen. Dabei sollen sich in den entsprechenden Führungen zum Abdichten der Schieber Bürstendichtungen befinden.

Die Schienen sind Teil eines Rahmens, der zumindest teilweise in die Gehäuseöffnung eingesetzt ist. Der Schieber fungiert als extra Bauteil und ist auch wegen dieser Eigenschaft perfekt dafür geeignet um in Bestandsgebäuden eingesetzt werden zu können.

Ein weiteres Merkmal ist, dass der Schieber aus zumindest drei Schichten besteht, von denen eine Schicht aus einem thermoresistenten Material hergestellt ist. Damit ist gewährleistet, dass der Aufzugsschacht isoliert ist und keine Kalt -und/oder Warmluft in den Schacht gerät und die Energieeffizienz des Gebäudes beeinträchtigt. Ferner kann der Schieber einer längeren Brandbeaufschlagung standhalten.

Das thermoresistente Material beinhaltet oder besteht bevorzugt aus Mineralwolle oder Kalziumsilikat oder einem anderen thermoresistenten Material, welches eine besonders dämmende brandschutztechnische Eigenschaft besitzt und den heutigen Standards der Energieverordnung und Brandschutzverordnungen entspricht.

Weiterhin wird das thermoresistente Material beidseits mit einem Metall belegt, welches ebenfalls einem Brand länger standhält und den Schieber vor eventueller Abnutzung schützt und lange haltbar macht.

Der Schieber soll im erfindungsgemässen Ausführungsbeispiel elektromotorisch betrieben werden, damit er über eine Steuerung autonom und in einem möglichen Brandfall schnell zu bedienen ist.

Es ist auch anzumerken, dass der Schieber in dem Öffnungsquerschnitt der Öffnung verbleibt und nur bei Bedarf, insbesondere bei Ansprache eines Sensors, insbesondere eines Rauch- oder CO₂-Melders oder bei Wartung, aus dem Öffnungsquerschnitt entfernt wird. Auch das gewährleistet eine hohe Energieeffizienz.

### Figurenbeschreibung

Weitere Vorteile, Merkmale und Einzelheiten der Erfindung ergeben sich aus der nachfolgenden Beschreibung Ausführungsbeispiele sowie anhand der Zeichnungen; diese zeigen in:
**Figur 1** einen teilweise dargestellten Querschnitt eines Aufzugschachtes mit einer erfindungsgemässen Vorrichtung zum kontrollierten Öffnen und/oder Schliessen der Schachtöffnung in Gebrauchslage;
**Figur 2** eine perspektivische Ansicht der erfindungsgemässen Vorrichtung gemäss Figur 1;
**Figur 3** einen teilweise dargestellten Querschnitt eines Aufzugschachtes mit einem weiteren Ausführungsbeispiel einer erfindungsgemässen der Vorrichtung zum kontrollierten Öffnen und/oder Schliessen der Schachtöffnung.

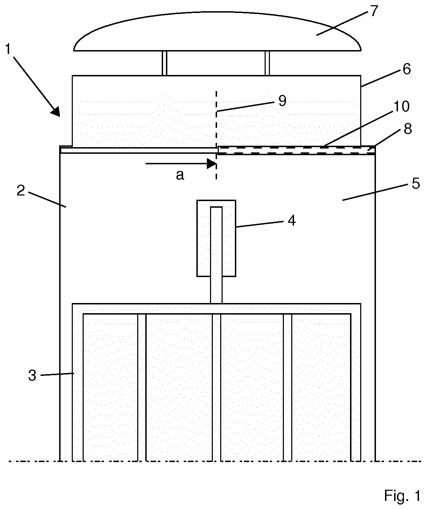

Die Figur 1 zeigt einen Gebäudeabschnitt 1 mit einem Aufzugsschacht 2 und einer Aufzugskabine 3, welche vertikal in dem Aufzugsschacht 2 hoch und runter fahrbar ist. Des Weiteren ist ersichtlich, dass an einem Schachtkopf 5 des Aufzugsschachts 2 eine Aufzugsmechanik 4 vorgesehen ist, die im weiteren Verlauf jedoch nicht weiter erklärt wird.

Im Bereich des Schachtkopfes 5 des Aufzugsschachts 2 mündet, ein im erfindungsgemässen Ausführungsbeispiel, horizontal angebrachte Öffnung 6 die als Abluft- und Entrauchungskanal fungiert, der den Aufzugsschacht 2 nach aussen, mit der ausserhalb des Gebäudes gelegenen Umgebungsluft verbindet. Über der Öffnung 6 kann eine Lichtkuppel 7 vorgesehen sein, über die Tageslicht in den Aufzugsschacht 2 einfallen kann bzw. die als Schnee - und Regenschutz dient.

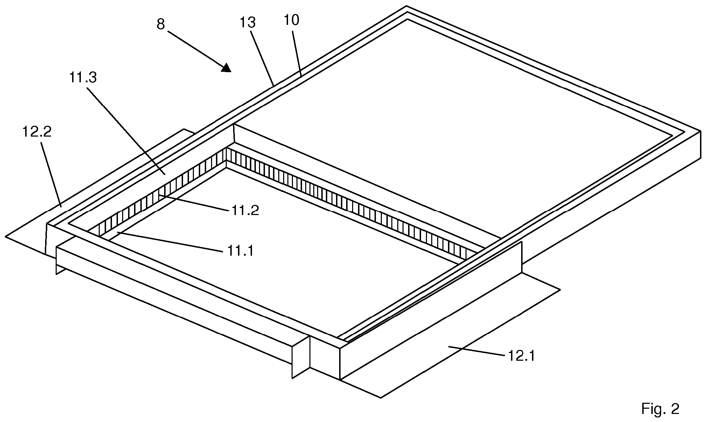

Der Öffnung 6 ist ein Schieber 8 zugeordnet, welcher quer zu der Öffnung 6 in den Öffnungsquerschnitt hinein bewegbar ist. Die Bewegung des Schiebers 8 erfolgt etwa rechtwinklig zu einer Mittelachse 9 der Öffnung 6 und ist mit einem Pfeil a gekennzeichnet. Damit eine Bewegung des Schiebers 8 möglich ist, wird dieser auf oder in Schienen 10 geführt, welches in Figur 2 nochmals genauer verdeutlicht wird.

In Figur 1 wird der Schieber 8 im geschlossenen Zustand gezeigt, jedoch zeigt die gestrichelte Linie an, in welche Position der Schieber 8 im geöffneten Zustand fährt.

Des Weiteren ist zu vermerken, dass der Schieber 8 einen Aussenumfang aufweist, der in etwa dem Querschnitt der Öffnung 6 entspricht.

In Figur 2 wird der Schieber 8 ruhend und in geöffnetem Zustand gezeigt. Der Schieber 8 ist in einem Rahmen 13 eingelassen, wobei der Rahmen 13 Schienen 10 beinhaltet über die der Schieber 8 hin und her bewegbar ist und so von einem geöffneten in einen geschlossenen Zustand gefahren werden kann. Der Schieber 8 muss möglichst luftdicht gehalten und geführt sein. Hierzu sind im erfindungsgemässen Ausführungsbeispiel Bürstendichtungen vorgesehen.

Es wird deutlich, dass der Schieber 8 aus zumindest drei Schichten 11.1 - 11.3 besteht, von denen eine Schicht 11.2 aus einem thermoresistenten Material, beispielsweise Mineralwolle aus Kalziumsilikat, hergestellt ist. Dies ergibt einen Wärmedurchgangswert (U-Wert) von etwa 1,2, während die bisherigen Werte von beispielsweise Rauchklappen bei etwa 10 liegen.

Die beiden weiteren Schichten 11.1 und 11.3 sind im erfindungsgemässen Ausführungsbeispiel aus Metall gefertigt und schliessen die Isolierschicht 11.2 zwischen sich ein.

Des Weiteren zeigt die Figur 2 zwei L-förmige Metalle, die zur Befestigung des Schiebers 8 dienen. Ausserdem weist der Schieber 8 eine sehr geringe Aufbauhöhe auf, sodass er ideal in bereits bestehende Auszugschächte 2 eingebaut werden kann.

Es sei noch zu bemerken, dass der Schieber 8 für die Abdichtung von Schächten oder Lichtkuppeln vorgesehen ist, wobei die Gebäudehülle nicht beeinträchtigt wird. Der Schieber 8 bleibt in der Regel in geschlossenem Zustand und wird nur in Sonderfällen geöffnet, beispielsweise bei einer Wartung oder wenn die Kabine in Kollision geraten könnte oder zur Be- und Entlüftung des Aufzugschachtes 2, wenn ein entsprechender Sensor CO₂ bzw. Rauch meldet. Ferner soll der Schieber 8 zusätzlich von Hand öffnebar sein.

Der Antrieb des Schiebers 8 geschieht bevorzugt über einen kleinen Elektromotor und über einen Kettenantrieb, der hier nicht weiter erklärt wird.

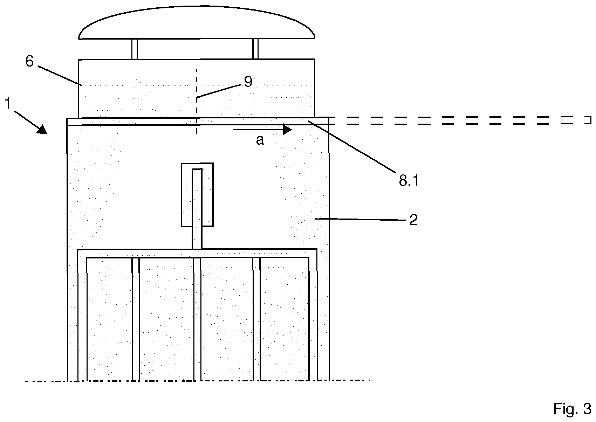

Figur 3 zeigt ein weiteres Ausführungsbeispiel der Anordnung eines Schiebers 8.1, wobei dieser in geöffnetem Zustand ausserhalb des Aufzugsschachts 2 fährt und somit den kompletten Querschnitt der Öffnung 6 freigibt, damit beispielsweise der Rauch noch schneller abziehen kann.

Ausserdem ist es denkbar, dass der Rahmen 13 in sich zwei Schieber 8 beinhalt, die entgegengesetzt öffnebar sind.

### Bezugszeichenliste

| | |
|---|---|
| 1 | Gebäudeabschnitt |
| 2 | Aufzugsschacht |
| 3 | Aufzugskabine |
| 4 | Aufzugsmechanik |
| 5 | Schachtkopf |
| 6 | Öffnung |
| 7 | Lichtkuppel |
| 8 | Schieber |
| 9 | Mittelachse |
| 10 | Schienen |
| 11 | Schicht |
| 12 | L-förmiges Metall |
| 13 | Rahmen |

## Patentansprüche

1. Vorrichtung zum kontrollierten Öffnen und/oder Schliessen einer Öffnung (6) in einem Gebäude (1), wobei dieser Öffnung (6) ein Schieber (8, 8.1) für die Abdichtung von Schächten oder Lichtkuppeln zugeordnet ist, welcher quer zu der Öffnung (6) in den Öffnungsquerschnitt hinein bewegbar ist, wobei die Bewegung (a) des Schiebers (8, 8.1) etwa rechtwinklig zu einer Mittelachse (9) der Öffnung (6) erfolgt, wobei der Schieber (8, 8.1) einen Aussenumfang aufweist, der in etwa dem Querschnitt der Öffnung (6) entspricht, wobei der Schieber (8, 8.1) an und/oder in Schienen (10) geführt ist, wobei die Schienen (10) Teil eines Rahmens (13) sind, der zumindest teilweise in die Öffnung (6) eingesetzt ist, wobei der Schieber (8, 8.1) aus zumindest drei Schichten (11.1 - 11.3) besteht, von denen eine Schicht (11.2) aus einem thermoresistenten Material hergestellt ist, wobei das thermoresistente Material Mineralwolle oder Kalziumsilikat oder einem anderen thermoresistenten Material ist oder beinhaltet, wobei das thermoresistente Material beidseits mit einem Metall (11.1, 11.3) belegt ist, wobei der Schieber (8, 8.1) elektromotorisch betrieben ist,
**dadurch gekennzeichnet,**
**dass** sich in Führungen zum Abdichten der Schieber Bürstendichtungen befinden, wobei in einem Bereich eines Schachtkopfes (5) eines Aufzugsschachts (2) die horizontal angebrachte Öffnung (6) als Abluft- und Entrauchungskanal fungiert, der den Aufzugsschacht (2) nach aussen, mit der ausserhalb des Gebäudes (1) gelegenen Umgebungsluft verbindet.

2. Verfahren zum kontrollierten Öffnen und/oder Schliessen einer Öffnung (6) in einem Gebäude (1) mittels einer Vorrichtung nach dem Anspruch 1 zum kontrollierten Öffnen und/oder Schliessen einer Öffnung (6) in einem Gebäude (1), **dadurch gekennzeichnet, dass** der Schieber (8, 8.1) in dem Öffnungsquerschnitt der Öffnung (6) verbleibt und nur bei Bedarf, insbesondere bei Ansprache eines Sensors, insbesondere eines Rauch- oder CO₂-Melders oder bei Wartung, aus dem Öffnungsquerschnitt entfernt wird.

## Claims

1. Device for the controlled opening and/or closing of an opening (6) in a building (1), this opening (6) being assigned a slider (8, 8.1) for sealing shafts or skylight domes, which slider can be moved transversely to the opening (6) into the opening cross-section, the movement (a) of the slider (8, 8. 1) takes place approximately at right angles to a centre axis (9) of the opening (6), wherein the slider (8, 8.1) has an outer circumference which corresponds approximately to the cross-section of the opening (6), wherein the slider (8, 8. 1) is guided on and/or in rails (10), wherein the rails (10) are part of a frame (13) which is at least partially inserted into the opening (6), wherein the slider (8, 8.1) consists of at least three layers (11.1 - 11.3), of which one layer (11. 2) is made of a thermoresistant material, wherein the thermoresistant material is or contains mineral wool or calcium silicate or another thermoresistant material, wherein the thermoresistant material is covered on both sides with a metal (11.1, 11.3), wherein the slider (8, 8.1) is operated by an electric motor,
**characterized in that**
brush seals are located in guides for sealing the sliders, wherein in a region of a shaft head (5) of a lift shaft (2) the horizontally mounted opening (6) functions as an exhaust air and smoke extraction duct, which connects the lift shaft (2) to the outside with the ambient air located outside the building (1).

2. Method for the controlled opening and/or closing of an opening (6) in a building (1) by means of a device according to claim 1 for the controlled opening and/or closing of an opening (6) in a building (1), **characterized in that** the slider (8, 8.1) remains in the opening cross-section of the opening (6) and is only removed from the opening cross-section when required, in particular when a sensor, in particular a smoke or CO2 detector, is triggered or during maintenance.

## Revendications

1. Dispositif permettant l'ouverture et/ou la fermeture contrôlées d'une ouverture (6) dans un bâtiment (1), dans lequel un coulisseau (8, 8.1) est associé à ladite ouverture (6) pour assurer l'étanchéité de cages ou de lumidômes, lequel coulisseau peut être déplacé transversalement à l'ouverture (6) dans la section transversale d'ouverture, dans lequel le mouvement (a) du coulisseau (8, 8.1) est effectué à peu près perpendiculairement à un axe médian (9) de l'ouverture (6), dans lequel le coulisseau (8, 8.1) présente une périphérie extérieure qui correspond à peu près à la section transversale de l'ouverture (6), dans lequel le coulisseau (8, 8.1) est guidé sur et/ou dans des rails (10), dans lequel les rails (10) font partie d'un cadre (13) qui est inséré au moins partiellement dans l'ouverture (6), dans lequel le coulisseau (8, 8.1) est constitué d'au moins trois couches (11.1 - 11.3), dont une couche (11.2) est fabriquée à partir d'un matériau thermorésistant, dans lequel le matériau thermorésistant est ou contient de la laine minérale ou du silicate de calcium ou un autre matériau thermorésistant, dans lequel le matériau thermorésistant est recouvert des deux côtés d'un métal (11.1, 11.3), dans lequel le coulisseau (8, 8.1) est actionné par un moteur électrique, **caractérisé en ce que** des joints brosses se trouvent dans des guides pour assurer l'étanchéité du coulisseau, dans lequel, dans une zone d'une partie supérieure de cage (5) d'une cage d'ascenseur (2),
l'ouverture (6) montée horizontalement fonctionne comme un canal d'évacuation d'air et de désenfumage qui relie la cage d'ascenseur (2) vers l'extérieur à l'air ambiant situé à l'extérieur du bâtiment (1).

2. Procédé permettant l'ouverture et/ou la fermeture contrôlées d'une ouverture (6) dans un bâtiment (1) au moyen d'un dispositif selon la revendication 1 permettant l'ouverture et/ou la fermeture contrôlées d'une ouverture (6) dans un bâtiment (1), **caractérisé en ce que** le coulisseau (8, 8.1) reste dans la section transversale d'ouverture de l'ouverture (6) et n'est retiré de la section transversale d'ouverture qu'en cas de besoin, en particulier en cas de déclenchement d'un capteur, en particulier d'un détecteur de fumée ou de CO₂, ou en cas d'entretien.
